# EUROPÄISCHE PATENTSCHRIFT

(11) **EP 2 140 966 B1**
(45) Veröffentlichungstag und Bekanntmachung des Hinweises auf die Patenterteilung: **06.08.2014**
(21) Anmeldenummer: 09008501.0
(22) Anmeldetag: 30.06.2009
(51) Int. Cl.: B23K 26/06, B23K 26/40, B23K 26/00, B21D 51/38, B65B 61/26, G06K 1/12, B23K 26/08, B41M 5/24

(54) **Vorrichtung und Verfahren zum Beschriften von Behältnissen unter Verwendung von einer Vielzahl von Direktdiodenlasern**
Device for and method of writing on containers using a plurality of direct diode lasers
Dispositif et méthode pour l'inscription de récipients utilisant plusieurs sources laser diode directes

(30) Priorität: 30.06.2008 DE 102008030868
(43) Veröffentlichungstag der Anmeldung: 06.01.2010
(73) Patentinhaber: Krones AG, 93073 Neutraubling (DE)
(72) Erfinder: Gmeiner, Franz, 93161 Sinzing/Eilsbrunn (DE); Humele, Heinz, 93107 Thalmassing (DE)
(74) Vertreter: Bittner, Bernhard

(56) Entgegenhaltungen:
- EP-A- 0 060 641
- WO-A-92/08313
- DE-A1- 4 238 434
- US-A- 4 652 722
- US-B1- 6 201 210

## Beschreibung

Die vorliegende Erfindung bezieht sich auf eine Vorrichtung und ein Verfahren zum Beschriften von Behältnissen gemäß dem Oberbegriff der Anspruche 1 und 11 (siehe, z.B., US 4 652 722).

Ein Druckverfahren besteht in dem Einsatz einer Vielzahl von CO₂ - Lasern, d. h. von Gaslasern, welche Laserlicht auf die zu beschriftenden Behältnisse einstrahlen und auf diese Weise die Beschriftung der Behältnisse bewirken. Derartige Gaslaseranordnungen sind jedoch kostenintensiv und auch platzaufwändig, Der vorliegenden Erfindung liegt daher die Aufgabe zugrunde, eine Vorrichtung zum Beschriften von Behältnissen zur Verfügung zu stellen, die in ihrer Handhabung einfacher und kosteneffizienter ist. Dies wird durch Vorrichtungen nach den unabhängigen Ansprüchen erreicht. Vorteilhafte Ausführungsformen und Weiterbildungen sind Gegenstand der Unteransprüche.

Eine erfindungsgemäße Vorrichtung und ein Verfahren zum Beschriften von Behältnissen sind in den Ansprüchen 1 und 11 definiert.

Dabei hat sich überraschenderweise gezeigt, dass auch die für Festkörperlaser typischen Emissionswellenlängen, die im Bereich von 500nm - 1500nm liegen und sich daher deutlich von den für Gaslaser typischen Wellenlängen unterscheiden, für die Beschriftung von Kunststoffbehältnissen geeignet sind.

Gemäß der Erfindung handelt es sich bei den Laserlichtquellen um Diodenlaser. Derartige Diodenlaser sind, wie oben erwähnt, in der Herstellung kostengünstig, was sich wiederum auf die gesamte Vorrichtung auswirkt. Über die Lichtaustrittskörper, bei denen es sich beispielsweise um die Enden von Glasfasern handeln kann, wird das Laserlicht auf die Behältnisse gerichtet.

Vorzugsweise sind die Lichtaustrittskörper über eine Vielzahl von Lichtleitern mit dem Laserlichtquellen verbunden. Bei diesen Lichtleitern handelt es sich beispielsweise um Glasfasern und dergleichen. Auf diese Weise wird erreicht, dass die eigentlichen Laserlichtquellen an einem anderen Ort positioniert werden können wie die Lichtaustrittskörper, wodurch eine größere räumliche Unabhängigkeit für die Vorrichtung erreicht wird. Auch kann auf diese Weise die Kühlung der Laserlichtquellen erleichtert werden.

Gemäß der Erfindung wird als Laserlichtquelle ein so genannter Dirketdiodenlaser verwendet. Im Stand der Technik werden Diodenlaser üblicherweise verwendet, um andere Lasereinrichtungen wie beispielsweise YAG-Laser zu pumpen. Die Ausgangsstrahlung der hier beschriebenen Diodenlaser wird gemäß der Erfindung jedoch nicht zum pumpen verwendet, sondern direkt auf die zu beschriftenden Behältnisse gerichtet. Damit ist jedem Lichtaustrittskörper genau eine Laserlichtquelle zugeordnet.

Vorzugsweise sind die Lichtaustrittskörper in einem gemeinsamen Gehäuse angeordnet. Auf diese Weise ist es möglich, ein relativ kleinbauendes Gehäuse vorzusehen, welches eine Vielzahl von Lichtaustrittskörpern zum Beschriften der Behältnisse aufweist.

Gemäß der Erfindung sind wenigstens zwei Lichtaustrittskörper gegenüber einander in einer Transportrichtung der Behältnisse versetzt. Damit wird vorgeschlagen, dass die Behältnisse mit Hilfe einer Transporteinrichtung vorzugsweise vereinzelt transportiert werden und,die Lichtaustrittskörper in dieser Transportrichtung gegenüber einander versetzt sind. Auf diese Weise wird erreicht, dass die einzelnen Laserlichtquellen zur Erzeugung bestimmter Aufdrucke nicht gleichzeitig aktiviert werden müssen, sondern eine Aktivierung zeitversetzt erfolgen kann. Auf diese Weise können Spannungsspitzen bei der Leistungsversorgung der Laserlichtquellen vermieden werden.

Vorzugsweise sind die Lichtaustrittskörper gegenüber einer Längsrichtung der zu beschriftenden Behältnisse entlang einer schrägen Linie angeordnet. Dies bedeutet, dass sämtliche Lichtaustrittskörper jeweils gegenüber einander versetzt sind, wobei auch durch diese Vorgehensweise erreicht wird, dass sämtliche Laserlichtquellen zu unterschiedlichen Zeitpunkten aktiviert werden können.

Vorzugsweise handelt es sich bei den Laserlichtquellen um solche Lichtquellen, welche gepulste Strahlung oder so genannte quasi kontinuierliche Strahlung abgeben. Es können jedoch auch Laser verwendet werden, welche kontinuierliche Lichtleistung abgeben (sog. cw "continuous wave" - Laser).

Vorzugsweise werden zwischen fünf und 30 Lichtaustrittskörper, bevorzugt zwischen 10 und 20 Lichtaustrittskörper verwendet. Auf diese Weise ist eine feine Auflösung der jeweils zu druckenden Zeichen möglich.

Bei einer weiteren vorteilhaften Ausführungsform weist die Vorrichtung eine Transporteinrichtung auf, welche die Behältnisse vereinzelt transportiert.

Bei einer weiteren vorteilhaften Ausführungsform senden die Laserquellen Strahlung in einem Wellenlängenbereich aus, der zwischen 700 nm und 1300 nm liegt. Damit wird bevorzugt Strahlung in einem nah-infraroten (NIR) Spektralbereich verwendet.

Bei einer weiteren vorteilhaften Ausführungsform verlaufen die Lichtleiter wenigstens teilweise gemeinsam, Dies bedeutet, dass ein Bündel von Lichtleitern ausgehend von den Laserquellen in Richtung der zu beschriftenden Behältnisse geführt wird.

Vorzugsweise ist zwischen den Lichtaustrittskörpern und den Behältnissen wenigstens ein refraktives Element angeordnet. Dabei kann es sich beispielsweise um Linsen und insbesondere Zylinderlinsen handeln, welche die aus den Lichtaustrittskörpern austretende Strahlung auf die Behältnisse bündeln.

Vorzugsweise sind die Lichtaustrittskörper gemeinsam in der Transportrichtung der Behältnisse bewegbar. Durch diese Bewegbarkeit können beispielsweise Geschwindigkeitsunterschiede, die während des Transports der Behältnisse auftreten können, ausgeglichen werden. Vorzugsweise sind die Lichtaustrittskörper auf einem Schlitten angeordnet. Daneben wäre es auch möglich, die Lichtaustrittskörper in einer senkrecht zur Transportrichtung und insbesondere zu einer parallel zu der Längsrichtung der Behältnisse verlaufenden Richtung zu bewegen.

Bei einer weiteren vorteilhaften Ausführungsform weist die Vorrichtung eine Steuerungseinrichtung auf, welche eine Bewegung der Lichtaustrittskörper in der Transportrichtung der Behältnisse in Abhängigkeit von der Transportgeschwindigkeit der Behältnisse steuert. Falls beispielsweise die Arbeitsgeschwindigkeit der Transporteinrichtung reduziert werden muss, würde dies dazu führen, dass die Relativgeschwindigkeit zwischen den Behältnissen und den Lichtaustrittskörpern verringert wird. Dies würde zu einer Veränderung des Druckbildes führen. In diesem Falle wäre es möglich, durch eine Bewegung der Lichtaustrittskörper hier entgegen der Transportrichtung der Behältnisse die Relativgeschwindigkeit zwischen den Lichtaustrittskörpern und den Behältnissen zu regulieren bzw. anzupassen.

Dabei könnte im Prinzip auch noch im Falle eines Stillstandes einer Transporteinrichtung ein entsprechendes Behältnis beschrieben werden, in dem die Lichtaustrittskörper entgegen der Transportrichtung der Behältnisse mit der Normalgeschwindigkeit bewegt werden. Es wäre jedoch auch möglich, in Abhängigkeit von der Transportgeschwindigkeit andere Parameter, wie etwa die Leistung der Laserlichtquellen zu ändern.

Vorzugsweise weist die Transporteinrichtung Dreheinrichtungen auf, welche die Behältnisse um ihre eigene Achse drehen. Auf diese Weise kann in einem größeren Bereich in Umfangsrichtung de Behältnisse ein Aufdruck erzeugt werden. Auch wäre es möglich, durch eine derartige Dreheinrichtung die Relativgeschwindigkeit zwischen der Außenwandung der jeweiligen Behältnisse und der Beschriftungseinheit zu verändern

Vorzugsweise übertragen die Laserlichtquellen das Laserlicht mittels einer Vielzahl von Lichtleitern auf die Lichtaustrittskörper. Bei den Lichtaustrittskörpern kann es sich um eigenständige Körper handeln, es wäre jedoch auch möglich, dass die Lichtaustrittskörper die Enden der erwähnten Lichtleiter sind.

Vorzugsweise werden die Lichtaustrittskörper wenigstens zeitweise bewegt.

Weitere Vorteile und Ausführungsformen ergeben sich aus den beigefügten Zeichnungen:

Darin zeigen:
- Fig. 1: eine schematische Darstellung einer erfindungsgemäßen Vorrichtung zum Beschriften von Behältnissen;
- Fig. 2: eine Draufsicht auf eine Anordnung mit einer Vielzahl von Lichtaustrittskörpern;

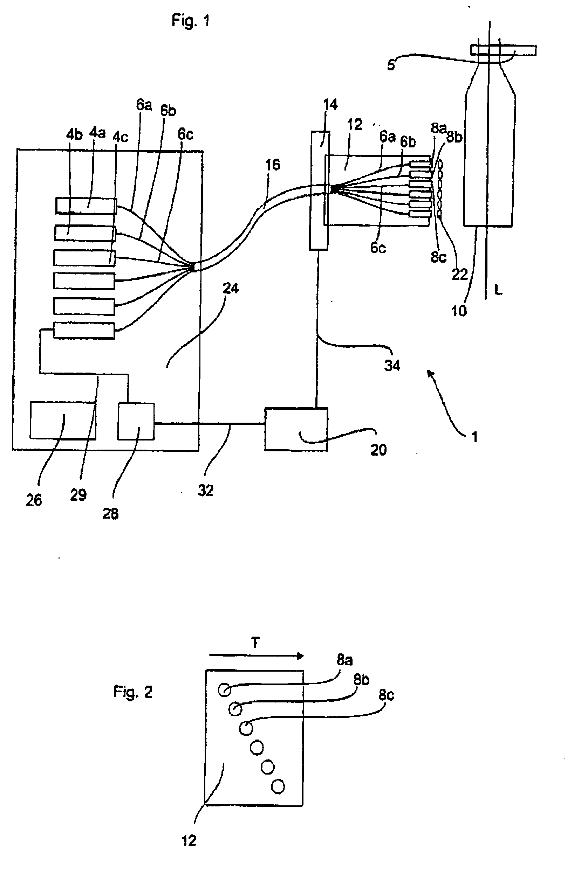

Figur 1 zeigt eine schematische Darstellung einer erfindungsgemäßen Vorrichtung 1 zum Beschriften von Behältnissen. Dabei ist eine nur angedeutete Transporteinrichtung 5 vorgesehen, welche die Behältnisse 10 in Figur 1 senkrecht zur Figurenebene fördert. Dabei kann es sich beispielsweise um einen Transportstern oder ähnliches handeln, an dem eine Vielzahl von Greifelementen angeordnet sind, welche die Behältnisse 10, bei denen es sich insbesondere um Kunststoffbehältnisse handelt, beispielsweise an deren Tragring fördern. Es wären jedoch prinzipiell auch andere Transporteinrichtungen wie Luftförderer und dergleichen denkbar.

Das Bezugszeichen 12 bezieht sich auf ein Gehäuse, in dem eine Vielzahl von Lichtaustrittskörpern 8a, 8b, 8c angeordnet ist. Dabei sind die einzelnen Lichtaustrittskörper 8a, 8b, 8c hier in einer Reihe nebeneinander angeordnet. Diese Lichtaustrittskörper 8a, 8b, 8c stehen über Lichtleiter 6a, 6b, 6c jeweils mit Laserlichtquellen 4a, 4b, 4c in verbindung. Dabei ist es, wie oben gesagt, auch denkbar, dass die Lichtaustrittskörper 8a, 8b, 8c die Enden der einzelnen Lichtleiter sind. Das Bezugszeichen 14 bezieht sich auf eine Halterung bzw. einen Träger, auf dem das Gehäuse mit den einzelnen Lichtaustrittskörpern 8a, 8b, 8c angeordnet ist. Dabei ist bevorzugt dieses Gehäuse 12 hier ebenfalls in einer Richtung, die senkrecht zur Figurenebene steht, beweglich. Weiterhin wäre es auch möglich, dass das Gehäuse 12 mit den Lichtaustrittskörpern 8a, 8b, 8c in der Längsrichtung L des Behältnisses verschiebbar ist, um Aufdrucke auf unterschiedlichen Höhen des Behältnisses anzubringen.

Die Laserlichtquellen 4a, 4b, 4c sind ebenfalls in einem feststehenden Gehäuse 24 angeordnet. Dabei sind vorzugsweise diese Laserquellen 4a, 4b, 4c weiter voneinander beabstandet als die einzelnen Lichtaustrittskörper, um auf diese Weise die Temperaturausgleich leichter zu bewerkstelligen.

Das Bezugszeichen 28 bezieht sich auf eine Steuerungseinrichtung, welche über eine Verbindung 29 mit den einzelnen Laserlichtquellen 4a, 4b, 4c in Verbindung steht.

Aus Gründen der Vereinfachung ist hier jedoch nur eine dieser Verbindungen 29 eingezeigt. Die einzelnen Lichtleiter werden zusammen in einer gemeinsamen Kabelverbindung 16 nebeneinander geführt.

Das Bezugszeichen 26 bezieht sich auf eine Leistungsversorgung bzw. Netzteil zur Versorgung der einzelnen Laserquellen 4a, 4b, 4c- Dabei bewirkt die Steuerungseinrichtung 28, dass die einzelnen Laserlichtquellen unabhängig voneinander steuerbar sind. Auf diese Weise kann jeweils Laserlicht über die Lichtleiter zu den Lichtaustrittskörpern 8a, 8b, 8c geleitet werden und dieses kann wiederum über Linsenelemente auf das Behältnis aufgebracht werden. Auf diese Weise können auf dem Behältnis in der Art eines Matrixdruckes Symbole, Buchstaben und Zeichen, wie beispielsweise ein Haltbarkeitsdatum aufgedruckt werden. Dabei ist zu erwähnen, dass das Behältnis 10 hier stark verkleinert dargestellt ist und in Wirklichkeit üblicherweise nur ein geringer Bereich beispielsweise im Bereich des Bodens des Behältnisses bedruckt wird.

Das Bezugszeichen 20 bezieht sich auf eine zentrale Steuerungseinrichtung, welche insbesondere auch die Transporteinrichtung 5 steuert. Gleichzeitig steht diese zentrale Steuerungseinrichtung über eine Verbindung 32 mit der Steuerungseinrichtung 28 in Verbindung. In Abhängigkeit einer Transportgeschwindigkeit der Behältnisse kann beispielsweise die Leistung der einzelnen Laserlichtquellen 4a, 4b, 4c gesteuert werden. Auch steht die zentrale Steuerungseinrichtung 20 über eine weitere Kommunikationsverbindung 34 mit einem Antrieb für das Gehäuse 12 in Verbindung, so dass in Abhängigkeit von der Transportgeschwindigkeit der Behältnisse auch die Bewegung des Gehäuses 12 mit den Lichtaustrittskörpern 8a, 8b, 8c gesteuert werden kann.

Das Bezugszeichen 22 zeigt refraktive Elemente, die zwischen den Lichtaustrittskörpern 8a, 8b, 8c und dem Behältnis angeordnet sind. Bei diesen refraktiven Elementen kann es sich beispielsweise um Linsen und insbesondere Zylinderlinsen handeln. Diese refraktiven Elemente sind vorzugsweise mechanisch an das Gehäuse gekoppelt und bewegen sich daher mit diesem mit.

Figur 2 zeigt eine Draufsicht auf ein Gehäuse 12 mit den darin angeordneten Liehtaustrittskörpern. Man erkennt, dass die einzelnen Lichtaustrittskörper 8a, 8b, 8c schräg bzw. seitlich versetzt zueinander angeordnet sind. Auf diese Weise kann erreicht werden, dass die Laserlichtquellen 4a, 4b, 4c zu unterschiedlichen Zeitpunkten aktiviert werden können. Es wäre jedoch grundsätzlich auch möglich, die einzelnen Laserlichtquellen 4a, 4b, 4c im kontinuierlichen Betrieb zu betreiben und eine Unterbrechung durch Schließelemente wie Shutter oder dergleichen zu bewerkstelligen. Auch wäre es möglich, das gesamte Gehäuse schräg zu stellen, um auf diese weise einen seitlichen Versatz der Lichtaustrittskörper zu erreichen. Auch wäre es möglich, eine entsprechende Schrägstellung zu variieren.

Sämtliche in den Anmeldungsunterlagen offenbarten Merkmale werden als erfindungswesentlich beansprucht, sofern sie einzeln oder in Kombination gegenüber dem Stand der Technik neu sind.

## Patentansprüche

1. Vorrichtung (1) zum Beschriften von Behältnissen (10) mit einer Beschriftungseinheit, wobei diese Beschriftungseinheit wenigstens eine Vielzahl von Festkörperlaserlichtquellen (4a, 4b, 4c) aufweist sowie eine Vielzahl von nebeneinander angeordneten Lichtaustrittskörpern (8a, 8b, 8c), welche Laserlicht auf die zu beschriftenden Behältnisse (10) richten,
**dadurch gekennzeichnet, dass**
die Vorrichtung eine Transporteinrichtung (16) aufweist, welche die Behältnisse (10) vereinzelt relativ bezüglich der Lichtaustrittskörper in einer Transportrichtung transportiert,
wobei die Laserlichtquellen (4a, 4b, 4c) Direktdiodenlaser sind, deren Ausgangsstrahlung nicht zum Pumpen verwendet wird, sondern direkt auf die zu beschriftenden Behältnisse richtbar ist und wenigstens zwei Lichtaustrittskörper (8a, 8b, 8c) in der Transportrichtung der Behältnisse (10) gegenüber einander versetzt angeordnet sind.

2. Vorrichtung (1) nach Anspruch 1
**dadurch gekennzeichnet, dass**
die Lichtaustrittskörper (8a, 8b, 8c) über eine Vielzahl von Lichtleitern (6a, 6b, 6c) mit den Laserlichtquellen (4a, 4b, 4c) verbunden sind.

3. Vorrichtung (1) nach einem der vorangegangenen Ansprüche
**dadurch gekennzeichnet, dass**
die Lichtaustrittskörper (8a, 8b, 8c) in einem gemeinsamen Gehäuse (12) angeordnet sind.

4. Vorrichtung (1) nach einem der vorangegangenen Ansprüche
**dadurch gekennzeichnet, dass**
die Lichtaustrittskörper (8a, 8b, 8c) gegenüber einer Längsrichtung (L) des Behältnisses (10) entlang einer schrägen Linie angeordnet sind.

5. Vorrichtung (1) nach einem der vorangegangenen Ansprüche
**dadurch gekennzeichnet, dass**
die Laserquellen Strahlung in einem Wellenlängenbereich aussenden, der zwischen 700nm und 1300nm liegt.

6. Vorrichtung (1) nach einem der vorangegangenen Ansprüche
**dadurch gekennzeichnet, dass**
die Lichtleiter (6a, 6b, 6c) wenigstens teilweise gemeinsam verlaufen.

7. Vorrichtung (1) nach einem der vorangegangenen Ansprüche
**dadurch gekennzeichnet, dass**
die einzelnen Laserquellen unabhängig voneinander steuerbar sind.

8. Vorrichtung (1) nach einem der vorangegangenen Ansprüche
**dadurch gekennzeichnet, dass**
zwischen den Lichtaustrittskörpern und den Behältnissen (10) wenigstens ein refraktives Element (18) angeordnet ist.

9. Vorrichtung (1) nach einem der vorangegangenen Ansprüche
**dadurch gekennzeichnet, dass**
die Lichtaustrittskörper (8a, 8b, 8c) gemeinsam in der Transportrichtung der Behältnisse (10) bewegbar sind.

10. Vorrichtung (1) nach einem der vorangegangenen Ansprüche
**dadurch gekennzeichnet, dass**
die Vorrichtung eine Steuerungseinrichtung (20) aufweist, welche eine Bewegung der Lichtaustrittskörper in der Transportrichtung der Behältnisse (10) in Abhängigkeit von der Transportgeschwindigkeit der Behältnisse steuert.

11. Verfahren zum Beschriften von Behältnissen, wobei die Behältnisse (10) mit Hilfe einer Vorrichtung (1) zum Beschriften der Behältnisse (10) einzeln beschriftet werden und die Vorrichtung (1) zum Beschriften der Behältnisse eine Vielzahl von nebeneinander angeordneten Lichtaustrittskörpern (8a, 8b, 8c) aufweist, welche von Festkörperlaserlichquellen (4a, 4b, 4c) generiertes Laserlicht auf die Behältnisse richten, wobei sich die Behältnisse während des Beschriftens relativ bezüglich der Lichtaustrittskörper bewegen,
**dadurch gekennzeichnet, dass**
die Behältnisse mit einer Transporteinrichtung entlang eines vorgegebenen Pfades vereinzelt transportiert werden und wobei die Laserlichtquellen (4a, 4b, 4c) Direktdiodenlaser sind, deren Ausgangsstrahlung, wobei sie während dieses Transports mit der Vorrichtung (1) einzeln beschriftet werden, nicht zum Pumpen verwendet wird, sondern direkt auf die zu beschriftenden Behältnisse gerichtet wird und wenigstens zwei Lichtaustrittskörper (8a, 8b, 8c) in einer Transportrichtung der Behältnisse (10) gegenüber einander versetzt angeordnet sind.

12. Verfahren nach Anspruch 11,
**dadurch gekennzeichnet, dass**
die Laserlichtquellen das Laserlicht mittels einer Vielzahl von Lichtleitern auf die Lichtaustrittskörper (8a, 8b, 8c) übertragen.

## Claims

1. Apparatus (1) for inscribing containers (10) which comprises an inscription unit, wherein this inscription unit comprises at least a plurality of solid state laser light sources (4a, 4b, 4c) and also a plurality of light discharge bodies (8a, 8b, 8c) which are arranged next to one another and which direct laser light onto the containers (10) to be inscribed, **characterised in that** the apparatus comprises a transport unit (16) which transports the containers (10) separately relatively with respect to the light discharge bodies in a transport direction wherein the laser light sources (4a, 4b, 4c) are direct diode lasers the emitted radiation of which is not used for pumping but can directly be directed onto the containers to be inscribed and at least two light discharge bodies (8a, 8b, 8c) are arranged in a displaced manner with respect to each other in the transport direction of the containers (10).

2. Apparatus (1) according to claim 1, **characterised in that** the light discharge bodies (8a, 8b, 8c) are connected to the laser light sources (4a, 4b, 4c) via a plurality of optical fibres (6a, 6b, 6c).

3. Apparatus (1) according to one of the preceding claims, **characterised in that** the light discharge bodies (8a, 8b, 8c) are arranged in a common housing (12).

4. Apparatus (1) according to one of the preceding claims, **characterised in that** the light discharge bodies (8a, 8b, 8c) are arranged along a diagonal line relative to a longitudinal direction (L) of the container (10).

5. Apparatus (1) according to one of the preceding claims, **characterised in that** the laser sources emit radiation in a wavelength range between 700 nm and 1300 nm.

6. Apparatus (1) according to one of the preceding claims, **characterised in that** the optical fibres (6a, 6b, 6c) run at least partially alongside one another.

7. Apparatus (1) according to one of the preceding claims, **characterised in that** the individual laser sources can be controlled independently of one another.

8. Apparatus (1) according to one of the preceding claims, **characterised in that** at least one refractive element (18) is arranged between the light discharge bodies and the containers (10).

9. Apparatus (1) according to one of the preceding claims, **characterised in that** the light discharge bodies (8a, 8b, 8c) can be moved jointly in the transport direction of the containers (10).

10. Apparatus (1) according to one of the preceding claims, **characterised in that** the apparatus comprises a control device (20) which controls a movement of the light discharge bodies in the transport direction of the containers (10) as a function of the transport speed of the containers.

11. Method for inscribing containers, wherein the containers 10 are transported individually by a transport device along a predefined path and during this transport are inscribed individually by means of an apparatus (1) for inscribing the containers (10), and the apparatus (1) for inscribing the containers comprises a plurality of light discharge bodies (8a, 8b, 8c) which are arranged next to one another and which direct laser light generated by the solid state laser light sources (4a, 4b, 4c) onto the containers, wherein the containers move relative to the light discharge bodies during the inscription, **characterised in that** the containers are transported with a transport unit separately along a preset path, wherein during the transportation with the apparatus (1) they are inscribed separately and wherein the laser light sources (4a, 4b, 4c) are direct diode lasers, the emitted radiation of which is not used for pumping but can directly be directed onto the containers to be inscribed and at least two light discharge bodies (8a, 8b, 8c) are arranged in a displaced manner with respect to each other in the transport direction of the containers (10).

12. Method according to claim 11, **characterised in that** the laser light sources transmit the laser light to the light discharge bodies (8a, 8b, 8c) by means of a plurality of optical fibres.

## Revendications

1. Installation (1) pour le marquage de récipients (10) avec une unité de marquage, ladite unité de marquage comportant au moins une pluralité de sources de lumière laser solide (4a, 4b, 4c) ainsi qu'une pluralité de corps de sortie de lumière (8a, 8b, 8c) disposés côte à côte, lesquels dirigent la lumière laser vers les récipients (10) à marquer,
**caractérisée en ce que**
ladite installation comporte un dispositif de transport (16) qui convoie individuellement dans une direction de transport les récipients (10) par rapport aux corps de sortie de lumière,
les sources de lumière laser (4a, 4b, 4c) étant des diodes laser directes dont le rayonnement de sortie n'est pas utilisé pour le pompage, mais peut être dirigé directement sur les récipients à marquer, et au moins deux corps de sortie de lumière (8a, 8b, 8c) étant disposés avec décalage l'un par rapport à l'autre dans la direction de transport des récipients (10).

2. Installation (1) selon la revendication 1,
**caractérisée en ce que**
les corps de sortie de lumière (8a, 8b, 8c) sont reliés aux sources de lumière laser (4a, 4b, 4c) par une pluralité de guides d'ondes lumineuses (6a, 6b, 6c).

3. Installation (1) selon l'une des revendications précédentes,
**caractérisée en ce que**
les corps de sortie de lumière (8a, 8b, 8c) sont disposés dans un boîtier (12) commun.

4. Installation (1) selon l'une des revendications précédentes,
**caractérisée en ce que**
les corps de sortie de lumière (8a, 8b, 8c) sont disposés sur une ligne inclinée par rapport à une direction longitudinale (L) du récipient (10).

5. Installation (1) selon l'une des revendications précédentes,
**caractérisée en ce que**
les sources laser émettent un rayonnement dans une zone de longueur d'onde comprise entre 700 nm et 1300 nm.

6. Installation (1) selon l'une des revendications précédentes,
**caractérisée en ce que**
les guides d'ondes lumineuses (6a, 6b, 6c) s'étendent au moins partiellement ensemble.

7. Installation (1) selon l'une des revendications précédentes,
**caractérisée**
**en ce que** les différentes sources laser peuvent être commandées indépendamment l'une de l'autre.

8. Installation (1) selon l'une des revendications précédentes,
**caractérisée en ce qu'**
au moins un élément réfractif (18) est disposé entre les corps de sortie de lumière et les récipients (10).

9. Installation (1) selon l'une des revendications précédentes,
**caractérisée en ce que**
les corps de sortie de lumière (8a, 8b, 8c) sont déplaçables ensemble dans la direction de transport des récipients (10).

10. Installation (1) selon l'une des revendications précédentes,
**caractérisée en ce que**
l'installation comporte un dispositif de commande (20) qui commande un déplacement des corps de sortie de lumière dans la direction de transport des récipients (10) en fonction de la vitesse de transport des récipients.

11. Procédé de marquage de récipients, où les récipients (10) sont marqués individuellement au moyen d'une installation (1) pour le marquage de récipients (10), et où ladite installation (1) pour le marquage de récipients comporte une pluralité de corps de sortie de lumière (8a, 8b, 8c) disposés côte à côte, lesquels dirigent vers les récipients la lumière laser générée par des sources de lumière laser solide (4a, 4b, 4c), lesdits récipients se déplaçant par rapport aux corps de sortie de lumière pendant le marquage,
**caractérisé en ce que**
les récipients sont convoyés individuellement par un dispositif de transport le long d'un chemin défini, étant marqués individuellement par l'installation (1) pendant ledit transport, **en ce que** les sources de lumière laser (4a, 4b, 4c) sont des diodes laser directes dont le rayonnement de sortie n'est pas utilisé pour le pompage, mais est dirigé directement sur les récipients à marquer, et **en ce qu'**au moins deux corps de sortie de lumière (8a, 8b, 8c) sont disposés avec décalage l'un par rapport à l'autre dans la direction de transport des récipients (10).

12. Procédé selon la revendication 11,
**caractérisé en ce que**
les sources de lumière laser transmettent la lumière laser aux corps de sortie de lumière (8a, 8b, 8c) au moyen d'une pluralité de guides d'ondes lumineuses.
